# EUROPEAN PATENT APPLICATION

(11) **EP 4 290 623 A1**
(43) Date of publication of application: **13.12.2023**
(21) Application number: 22749632.0
(22) Date of filing: 28.01.2022
(51) Int. Cl.: H01M 8/0206, H01M 8/0228, H01M 8/0286, H01M 8/12, C25B 13/04, C25B 9/19

(54) **ELECTROCHEMICAL DEVICE AND METHOD FOR MANUFACTURING SAME**

(30) Priority: 04.02.2021 JP 2021016421
(71) Applicant: Toshiba Energy Systems & Solutions Corporation, Saiwai-ku Kawasaki-shi Kanagawa 2120013 (JP)
(72) Inventor: INUZUKA, Riko, Kawasaki-shi, Kanagawa 212-0013 (JP); KAMEDA, Tsuneji, Kawasaki-shi, Kanagawa 212-0013 (JP); ASAYAMA, Masahiro, Kawasaki-shi, Kanagawa 212-0013 (JP); YOSHINO, Masato, Kawasaki-shi, Kanagawa 212-0013 (JP); OSADA, Norikazu, Kawasaki-shi, Kanagawa 212-0013 (JP); KOBAYASHI, Shohei, Kawasaki-shi, Kanagawa 212-0013 (JP)
(74) Representative: Hoffmann Eitle
(86) International application number: PCT/JP2022/003379
(87) International publication number: WO 2022/168760

(57) **Abstract**

To provide an electrochemical device capable of sufficiently ensuring sealing performance, and the like. The electrochemical device of this embodiment has an electrochemical cell with an electrolyte membrane interposed between a hydrogen electrode and an oxygen electrode; a plurality of separators formed of a metal material; and gas-sealing materials that seal at least one of between the electrochemical cell and the separator and between the plurality of separators. In the electrochemical device, diffusion-preventing coatings, which prevent diffusion of metal elements in the metal material composing the separators, cover surfaces of the separators. The diffusion-preventing coating is formed of a material that reacts with a material composing the gas-sealing material. There are portions where the separators are in direct contact with the gas-sealing materials.

## Description

### FIELD

Embodiments of the present invention relate to an electrochemical device and a manufacturing method thereof.

### BACKGROUND

An electrochemical device is a device related to hydrogen energy and has an electrochemical cell configured in a manner that a hydrogen electrode (fuel electrode) and an oxygen electrode (air electrode) sandwich an electrolyte membrane.

The electrochemical cell is classified into a solid polymer type, a phosphoric acid type, a molten carbonate type, a solid oxide type, and other types, according to an operating temperature range, a composing material, and a kind of fuel. Among these, a solid oxide electrochemical cell is attracting attention in terms of efficiency and the like.

The solid oxide electrochemical cell uses a solid oxide as an electrolyte membrane, and it can be used as a solid oxide fuel cell (SOFC) or a solid oxide electrolysis cell (SOEC).

In a case where the solid oxide electrochemical cell is used as the SOFC, for example, hydrogen supplied to a hydrogen electrode and oxygen (including oxygen in the air) supplied to an oxygen electrode react through an electrolyte membrane under a high-temperature condition, to thereby obtain electric energy. In contrast to this, in a case where the solid oxide electrochemical cell is used as the SOEC, for example, water (water vapor) is subjected to electrolysis under a high-temperature condition, resulting in that hydrogen is generated at a hydrogen electrode, and oxygen is generated at an oxygen electrode.

Generally, an electrochemical device is configured by an electrochemical cell stack in which a plurality of electrochemical cells are stacked to be electrically connected in series for the purpose of improving output. The electrochemical cell stack includes a plurality of separators. For example, a hydrogen flow path and an oxygen flow path are formed in the separator. The separator is conductive, for example, and electrically connects the plurality of stacked electrochemical cells.

### PRIOR ART DOCUMENT

### PATENT DOCUMENT

Patent Document 1: Japanese Laid-open Patent Publication No. 2018-170109
Patent Document 2: Japanese Laid-open Patent Publication No. 2019-185883

### SUMMARY OF THE INVENTION

### PROBLEMS TO BE SOLVED BY THE INVENTION

### [A] Configuration

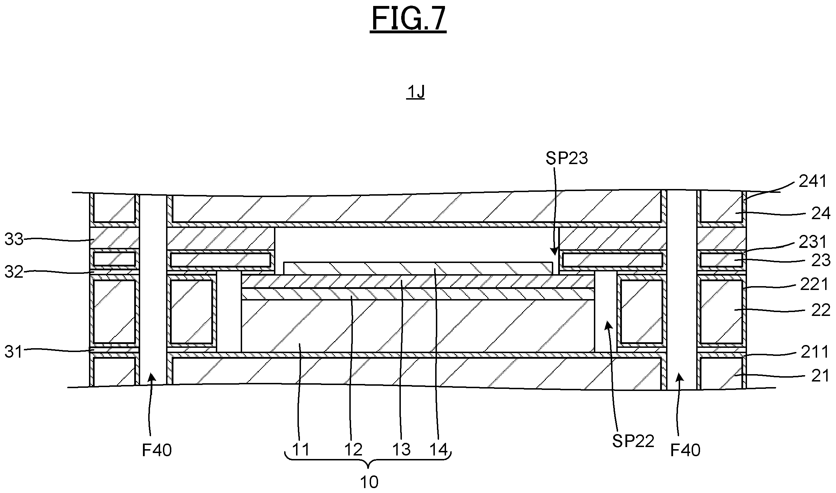

Fig. 7 is a sectional view illustrating an example of an electrochemical device according to a related art.

As illustrated in Fig. 7, an electrochemical device 1J has an electrochemical cell 10, separators 21, 22, 23, and 24, and gas-sealing materials 31, 32, and 33.

The electrochemical device 1J is a flat-type electrochemical cell stack though it is not illustrated, and Fig. 7 illustrates a portion where one electrochemical cell 10 among a plurality of electrochemical cells 10 that make up the electrochemical cell stack is provided.

The following is a detailed description of various parts that make up the electrochemical device 1J.

### [A-1] Electrochemical cell 10

As illustrated in Fig. 7, the electrochemical cell 10 has a support 11, a hydrogen electrode 12, an electrolyte membrane 13, and an oxygen electrode 14, and is configured in a manner that the electrolyte membrane 13 is interposed between the hydrogen electrode 12 and the oxygen electrode 14 on an upper surface of the support 11. The electrochemical cell 10 is a hydrogen electrode support type (fuel electrode support type), which is formed by sequentially stacking the hydrogen electrode 12, the electrolyte membrane 13, and the oxygen electrode 14 on the upper surface of the support 11.

In the electrochemical cell 10, the support 11 is composed of a porous electrical conductor.

The hydrogen electrode 12 is composed of a porous electrical conductor. The hydrogen electrode 12 is formed of Ni-YSZ (yttria-stabilized zirconia) or the like, for example.

The electrolyte membrane 13 is denser than the hydrogen electrode 12 and the oxygen electrode 14, composed of an ion conductor that does not conduct electricity but conducts ions. The electrolyte membrane 13 is formed of, for example, stabilized zirconia or the like, which is a solid oxide through which oxygen ions (O²⁻) permeate at an operating temperature.

The oxygen electrode 14 is composed of a porous electrical conductor. The oxygen electrode 14 is formed of perovskite-type oxide or the like, for example.

### [A-2] Separators 21, 22, 23, and 24

The separators 21, 22, 23, and 24 are stacked as illustrated in Fig. 7. The separator 22 is stacked above the separator 21, the separator 23 is stacked above the separator 22, and the separator 24 is stacked above the separator 23. The separators 21, 22, 23, and 24 are formed of a metal material, for example.

Among the plurality of separators 21, 22, 23, and 24, the separator 21 is a flat plate and the electrochemical cell 10 is disposed at a center part of an upper surface thereof. The separator 22 is a flat plate including an inner space SP22, which penetrates in a stack direction, at a center part thereof, and the inner space SP22 houses a portion at which the support 11, the hydrogen electrode 12, and the electrolyte membrane 13 are stacked in the electrochemical cell 10. The separator 23 is a flat plate (partition plate) including an inner space SP23, which penetrates in the stack direction, at a center part thereof, and the inner space SP23 houses the oxygen electrode 14 of the electrochemical cell 10. The separator 24 is a flat plate including a portion where a lower surface of the separator 24 faces the upper surface of the separator 21 through the inner space SP22 of the separator 22 and the inner space SP23 of the separator 23.

The respective surfaces of the plurality of separators 21, 22, 23, and 24 are coated with diffusion-preventing coatings 211, 221, 231, and 241. Here, the diffusion-preventing coatings 211, 221, 231, and 241 are provided to cover all exposed surfaces of the separators 21, 22, 23, and 24 in terms of workability.

The diffusion-preventing coatings 211, 221, 231, and 241 are provided to prevent metal elements (such as Cr) in the metal material composing the separators 21, 22, 23, and 24 from diffusing and adversely affecting the electrochemical cell 10. Concretely, the diffusion-preventing coatings 211, 221, 231, and 241 prevent the metal elements (such as Cr) in the metal material composing the separators 21, 22, 23, and 24 from evaporating from a metal surface and deteriorating performance of the electrochemical cell 10.

The diffusion-preventing coatings 211, 221, and 231 are formed, for example, using a material containing at least one of oxides of Co, Mn, Cu, Ni, and Fe. Here, the diffusion-preventing coatings 211, 221, and 231 are formed using oxides such as spinel and perovskite.

### [A-3] gas-sealing materials 31, 32, and 33

The gas-sealing materials 31, 32, and 33 have plate-shaped bodies as illustrated in Fig. 7, and are formed of materials such as glass and mica. The materials composing the gas-sealing materials 31, 32, and 33 are required to satisfy conditions such as being stable at high operating temperatures (600-1000°C), having a thermal expansion coefficient similar to that of a bonding member, and being insulating.

Here, the gas-sealing materials 31, 32, and 33 are interposed between each of the stacked plurality of separators 21, 22, 23, and 24. Concretely, the gas-sealing material 31 is interposed between the separator 21 and separator 22, the gas-sealing material 32 is interposed between the separator 22 and separator 23, and the gas-sealing material 33 is interposed between the separator 23 and separator 24. The gas-sealing material 32 is interposed between a lower surface of the separator 23 and an upper surface of the electrolyte membrane 13 of the electrochemical cell 10. The gas-sealing materials 31, 32, and 33 seal between each of the plurality of separators 21, 22, 23, and 24 and provide electrical insulation therebetween.

### [A-4] Gas flow path 40

As illustrated in Fig. 7, gas flow paths 40 are formed in the electrochemical device 1J. The gas flow paths 40 are formed on side portions of the electrochemical cell 10 so as to penetrate the separators 21, 22, 23, and 24 and gas-sealing materials 31, 32, and 33 in the stack direction.

The gas flow path 40 is a flow path of hydrogen electrode gas that flows through the hydrogen electrode 12 of the electrochemical cell 10 or a flow path of oxygen electrode gas that flows through the oxygen electrode 14 of the electrochemical cell 10. The hydrogen electrode gas is gas used for reaction at the hydrogen electrode 12 and gas generated in the reaction at the hydrogen electrode 12. The oxygen electrode gas is gas used for reaction at the oxygen electrode 14 and gas generated in the reaction at the oxygen electrode 14.

### [B] Problems

As described above, the respective surfaces of the plurality of separators 21, 22, 23, and 24 are coated with the diffusion-preventing coatings 211, 221, 231, and 241. The diffusion-preventing coatings 211, 221, 231, and 241 include portions in contact with the gas-sealing materials 31, 32, and 33, as illustrated in Fig. 7.

Reactions may occur between a material composing the diffusion-preventing coatings 211, 221, 231, and 241 and a material composing the gas-sealing materials 31, 32, and 33. For example, reactions may occur in the case of the following materials.
• Material composing the diffusion-preventing coatings 211, 221, 231, and 241: Oxide containing at least one element of Co and Mn.
• Material composing the gas-sealing materials 31, 32, and 33: Glass sealing material containing at least one element of B, Ba, and Si.

When a reaction occurs between the material composing the diffusion-preventing coatings 211, 221, 231, and 241 and the material composing the gas-sealing materials 31, 32, and 33, numerous bubbles may occur. As a result, the gas-sealing materials 31, 32, and 33 may deteriorate, making it difficult to ensure sufficient sealing performance. In addition, the diffusion-preventing coatings 211, 221, 231, and 241 may deteriorate, making it difficult to sufficiently prevent diffusion of metal elements (such as Cr) in the metal material composing the separators 21, 22, 23, and 24.

Therefore, the problem to be solved by the present invention is to provide an electrochemical device capable of sufficiently ensuring sealing performance, and the like, and a manufacturing method thereof.

### MEANS FOR SOLVING THE PROBLEMS

An electrochemical device of this embodiment has an electrochemical cell with an electrolyte membrane interposed between a hydrogen electrode and an oxygen electrode, a plurality of separators formed of a metal material, and gas-sealing materials that seal at least one of between the electrochemical cell and the separator and between the plurality of separators. In the electrochemical device, diffusion-preventing coatings, which prevent diffusion of metal elements in the metal material composing the separators, cover surfaces of the separators. The diffusion-preventing coating is formed of a material that reacts with a material composing the gas-sealing material. There are portions where the separators are in direct contact with the gas-sealing materials.

### BRIEF DESCRIPTION OF THE DRAWINGS

[Fig. 1] Fig. 1 is a sectional view illustrating an example of an electrochemical device according to a first embodiment.
[Fig. 2] Fig. 2 is a sectional view illustrating an example of an electrochemical device according to a second embodiment.
[Fig. 3] Fig. 3 is a sectional view illustrating an example of an electrochemical device according to a third embodiment.
[Fig. 4] Fig. 4 is an enlarged sectional view illustrating an enlarged part of the electrochemical device according to the third embodiment.
[Fig. 5A] Fig. 5A is a sectional view illustrating a process of manufacturing the electrochemical device according to the third embodiment.
[Fig. 5B] Fig. 5B is a sectional view illustrating a process of manufacturing the electrochemical device according to the third embodiment.
[Fig. 5C] Fig. 5C is a sectional view illustrating a process of manufacturing the electrochemical device according to the third embodiment.
[Fig. 5D] Fig. 5D is a sectional view illustrating a process of manufacturing the electrochemical device according to the third embodiment.
[Fig. 6A] Fig. 6A is an enlarged sectional view illustrating an enlarged part of the electrochemical device according to the third embodiment.
[Fig. 6B] Fig. 6B is an enlarged sectional view illustrating an enlarged part of the electrochemical device according to the third embodiment.
[Fig. 7] Fig. 7 is a sectional view illustrating an example of an electrochemical device according to a related art.

### DETAILED DESCRIPTION

### <First embodiment>

### [A] Configuration

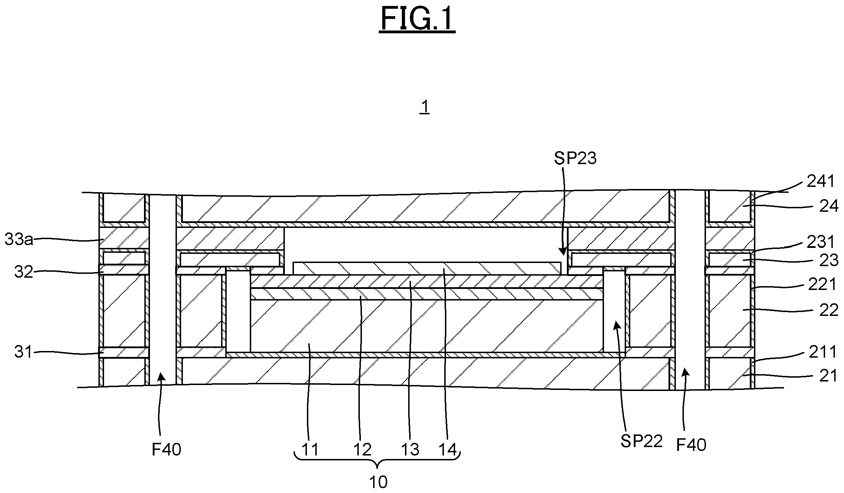

Fig. 1 is a sectional view illustrating an example of an electrochemical device according to a first embodiment.

As illustrated in Fig. 1, a configuration of some of the separators 21, 22, and 23 in the electrochemical device 1 of this embodiment is different from the case of the related art (see Fig. 7). In addition, the gas-sealing material 33a is different from the case of the related art. Except for these and related points, this embodiment is the same as in the case of the related art, so the description of duplicated items will be omitted as appropriate.

In this embodiment, the separators 21, 22, and 23 include portions in direct contact with the gas-sealing materials 31, 32 without the interposing diffusion-preventing coatings 211, 221, and 231, which is different from the case of the related art (see Fig. 7), as illustrated in Fig. 1.

Concretely, the separator 21 includes a portion in direct contact with the gas-sealing material 31 without the interposing diffusion-preventing coating 211. The separator 22 includes portions in direct contact with the gas-sealing materials 31, 32 without the interposing diffusion-preventing coating 221. The separator 23 includes a portion in direct contact with the gas-sealing material 32 without the interposing diffusion-preventing coating 231.

This configuration is made, for example, by carrying out a process of coating the diffusion-preventing coatings 211, 221, and 231 on the separators 21, 22, and 23 with masking treatment applied to the portions, which are in direct contact with the gas-sealing materials 31, 32.

The gas-sealing material 33a is formed of a material that does not react with the material composing the diffusion-preventing coatings 231, 241 different from the case of the related art. For example, the gas-sealing material 33a is formed of the following materials.

### Material composing the gas-sealing material 33a: Mica

### [B] Summary

As described above, in this embodiment, the separators 21, 22, and 23 include the portions in direct contact with the gas-sealing materials 31, 32 without the interposing diffusion-preventing coatings 211, 221, and 231. Therefore, in this embodiment, bubbles are not generated because no reaction occurs between the material composing the diffusion-preventing coatings 211, 221, and 231 and the material composing the gas-sealing materials 31, 32. As a result, in this embodiment, the sealing performance is sufficiently ensured without deteriorating the gas-sealing materials 31, 32, and the diffusion of metal elements (such as Cr) in the metal material composing the separators 21, 22, 23, and 24 can be sufficiently prevented without deteriorating the diffusion-preventing coatings 211, 221, and 231.

The diffusion-preventing coatings 211, 221, and 231 contain at least one of oxides of Co, Mn, Cu, Ni, and Fe. This allows a high Cr diffusion control effect to be achieved.

In this embodiment, the gas-sealing material 33a is made of the above material, which is difficult to make thin because thinning is not necessary. However, when the gas-sealing material 33a is formed of the same material as the other gas-sealing materials 31, 32 because thinning of the gas-sealing material 33a is necessary, the separator 24 is preferably configured to include a portion in direct contact with the gas-sealing material 33a without the interposing diffusion-preventing coatings 211, 221, and 231.

### <Second embodiment>

### [A] Configuration

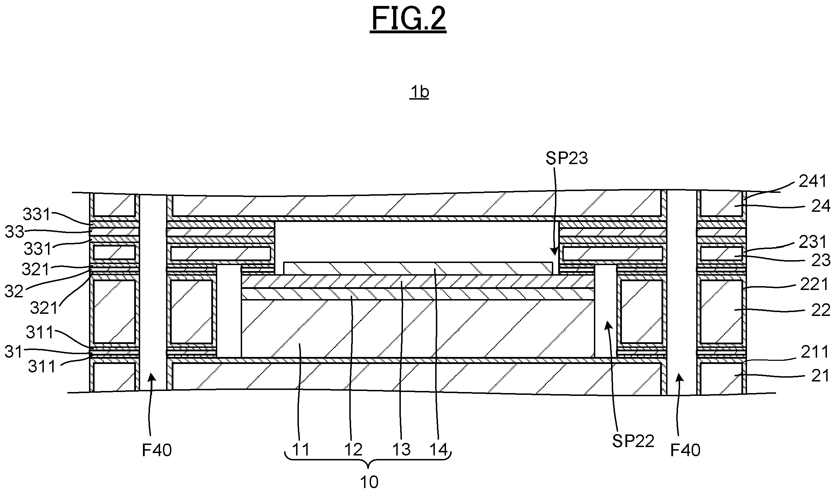

Fig. 2 is a sectional view illustrating an example of an electrochemical device according to a second embodiment.

As illustrated in Fig. 2, an electrochemical device 1b of this embodiment has reaction-preventing layers 311, 321, and 331, which is different from the case of the related art (see Fig. 7). Except for this and related points, this embodiment is the same as in the case of the related art, so the description of duplicated items will be omitted as appropriate.

The reaction-preventing layers 311, 321, and 331 are interposed between the diffusion-preventing coatings 211, 221, 231, and 241 and the gas-sealing materials 31, 32, and 33.

Concretely, the reaction-preventing layer 311 is interposed between the diffusion-preventing coating 211 and the gas-sealing material 31, as well as between the diffusion-preventing coating 221 and the gas-sealing material 31. The reaction-preventing layer 321 is interposed between the diffusion-preventing coating 221 and the gas-sealing material 32, as well as between the diffusion-preventing coating 231 and the gas-sealing material 32. The reaction-preventing layer 331 is interposed between the diffusion-preventing coating 231 and the gas-sealing material 33, as well as between the diffusion-preventing coating 241 and the gas-sealing material 33.

The reaction-preventing layers 311, 321, and 331 are formed of alumina, for example, to prevent reactions between the diffusion-preventing coatings 211, 221, and 231 and the gas-sealing materials 31, 32, and 33.

A deposition method of the reaction-preventing layers 311, 321, and 331 is, for example, calorizing, PVD, or other methods.

A thickness of the reaction-preventing layers 311, 321, and 331 is, for example, several hundred nm to several tens of µm.

### [B] Summary

As described above, the reaction-preventing layers 311, 321, and 331 are interposed between the diffusion-preventing coatings 211, 221, 231, and 241 and the gas-sealing materials 31, 32, and 33 in this embodiment. Therefore, in this embodiment, bubbles are not generated because no reaction occurs between the material composing the diffusion-preventing coatings 211, 221, 231, and 241 and the material composing the gas-sealing materials 31, 32, and 33. As a result, in this embodiment, the sealing performance can be sufficiently ensured because the gas-sealing materials 31, 32, and 33 do not deteriorate, and the diffusion of metal elements (such as Cr) in the metal material composing the separators 21, 22, 23, and 24 can be sufficiently prevented because the diffusion-preventing coatings 211, 221, 231, and 241 do not deteriorate.

### <Third embodiment>

### [A] Configuration

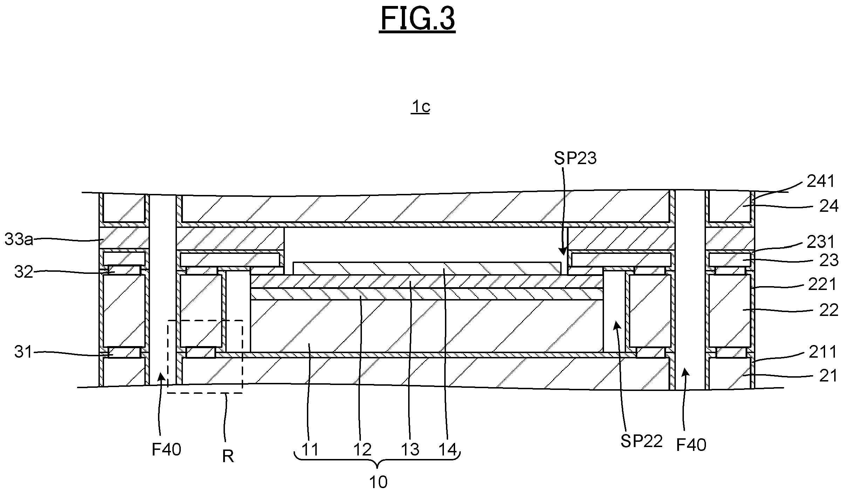

Fig. 3 is a sectional view illustrating an example of an electrochemical device according to a third embodiment.

As illustrated in Fig. 3, in an electrochemical device 1c of this embodiment, the separators 21, 22, and 23 include portions in direct contact with the gas-sealing materials 31, 32 without the interposing diffusion-preventing coatings 211, 221, and 231 as in the case of the first embodiment (see Fig. 1). However, in the electrochemical device 1c of this embodiment, forms of the gas-sealing materials 31, 32 are different from the case of the first embodiment, as illustrated in Fig. 3. Except for this and related points, this embodiment is the same as in the case of the first embodiment, so the description of duplicated items will be omitted as appropriate.

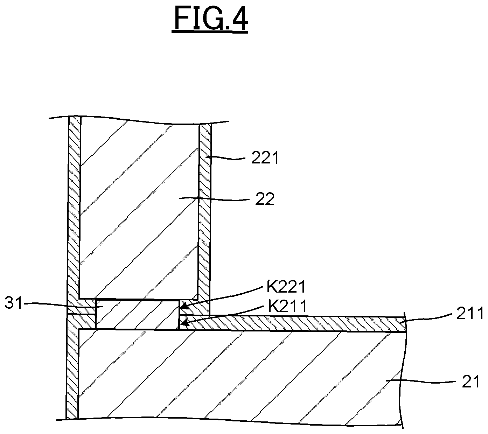

Fig. 4 is an enlarged sectional view of an enlarged part of the electrochemical device of the third embodiment. Fig. 4 illustrates a region R in Fig. 3 where the gas-sealing material 31 is provided between the separator 21 and separator 22. A portion where the gas-sealing material 32 is provided between the separator 22 and separator 23 in Fig. 3 is the same as in Fig. 4, so the figure and explanation are omitted.

As illustrated in Fig. 4, a surface of the separator 21 (first separator) is coated with the diffusion-preventing coating 211 (first diffusion-preventing coating). A surface of the separator 22 (second separator) is coated with the diffusion-preventing coating 221 (second diffusion-preventing coating).

A through opening K211 (first through opening), which penetrates the diffusion-preventing coating 211 in a stack direction (longitudinal direction in Fig. 4) where the separator 21 and separator 22 are stacked, is formed in the diffusion-preventing coating 211.

Similarly, a through opening K221 (second through opening), which penetrates the diffusion-preventing coating 211 in the stack direction where the separator 21 and separator 22 are stacked, is formed in the diffusion-preventing coating 221. The through opening K221 is formed to be opposite to the through opening K211 in the stack direction where the separator 21 and separator 22 are stacked.

In this embodiment, the gas-sealing material 31 is provided inside the through openings K211 and K221. A surface of the gas-sealing material 31 on the separator 21 side (lower surface in Fig. 4) is in direct contact with the surface of the separator 21. A surface of the gas-sealing material 31 on the separator 22 side (upper surface in Fig. 4) is in direct contact with the surface of the separator 22. A surface of the gas-sealing material 31 along the stack direction (side surface in Fig. 4) is surrounded by the diffusion-preventing coating 211 and the diffusion-preventing coating 221.

### [B] Manufacturing method

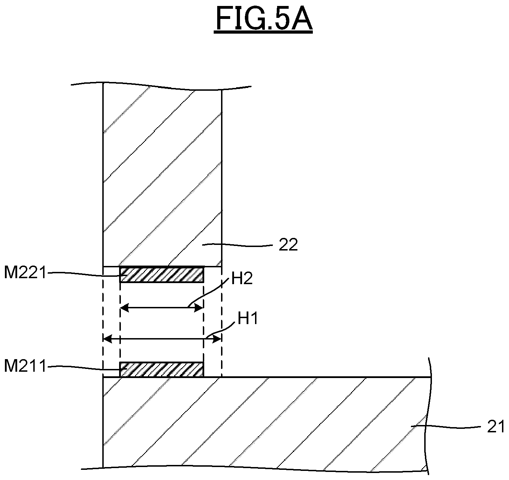

Fig. 5A to Fig. 5D are sectional views illustrating processes of manufacturing the electrochemical device of the third embodiment. Fig. 5A to Fig. 5D illustrate the region R in Fig. 3 where the gas-sealing material 31 is provided between the separator 21 and separator 22 as in Fig. 4. The portion where the gas-sealing material 32 is provided between the separator 22 and separator 23 in Fig. 3 is similar to Fig. 5A to Fig. 5D, so the figures and explanations are omitted.

### [B-1] Mask layer formation process

First, mask layers M211 and M221 are formed as illustrated in Fig. 5A.

Here, the mask layer M211 (first mask layer) is formed on the surface of the separator 21 in the region where the through opening K211 (see Fig. 4) is formed. Also, the mask layer M221 (second mask layer) is formed on the surface of the separator 22 in the region where the through opening K221 (see Fig. 4) is formed.

The mask layers M211, M221 are made by applying a coated film formed by a material of the mask layers M211, M221 to the region where the mask layers M211, M221 are to be formed.

In this embodiment, the mask layers M211, M221 are formed at a center part of the surface where the separator 21 and separator 22 overlap when the separator 21 and separator 22 are stacked. The mask layers M211, M221 are formed so that a width H2 is narrower than a width H1 of the surface where the separator 21 and separator 22 overlap when the separator 21 and separator 22 are stacked.

### [B-2] diffusion-preventing coating formation process

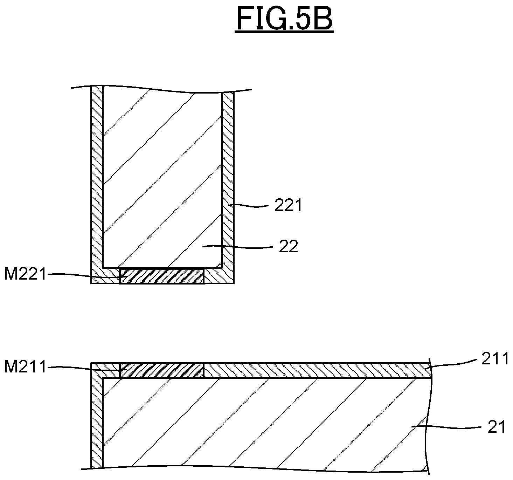

Next, the diffusion-preventing coatings 211, 221 are formed as illustrated in Fig. 5B.

Here, the diffusion-preventing coating 211 is formed on the surface of the separator 21 where the mask layer M211 is formed. The diffusion-preventing coating 211 is formed to cover a portion of the surface of the separator 21 other than the portion where the mask layer M211 is formed. The diffusion-preventing coating 221 is also formed on the surface of the separator 22 where the mask layer M221 is formed. The diffusion-preventing coating 221 is formed to cover the portion other than the portion where the mask layer M221 is formed on the surface of the separator 22.

### [B-3] Mask layer removal process

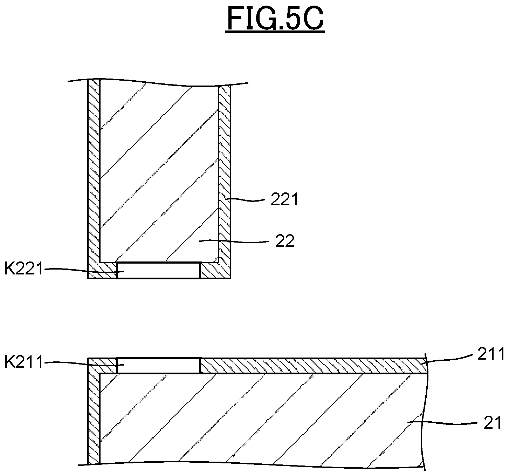

Next, the mask layers M211, M221 (see Fig. 5B) are removed as illustrated in Fig. 5C.

Here, the through opening K211 is formed by removing the mask layer M211 (see Fig. 5B) from the surface of the separator 21 where the diffusion-preventing coating 211 is formed. The through opening K221 is formed by removing the mask layer M221 (see Fig. 5B) from the surface of the separator 22 where the diffusion-preventing coating 221 is formed.

The removal of the mask layers M211, M221 is performed using agents that dissolve the material of the mask layers M211, M221.

### [B-4] gas-sealing material formation process

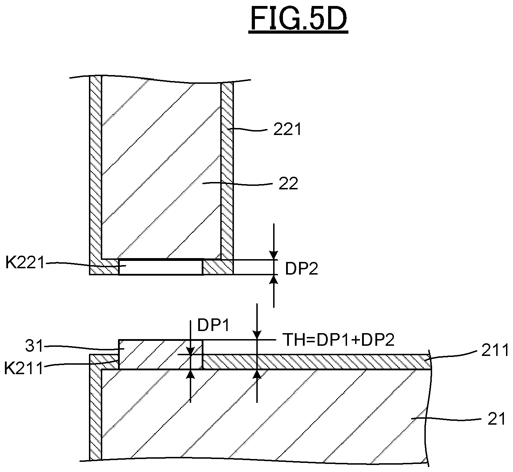

Next, the gas-sealing material 31 is formed as illustrated in Fig. 5D.

Here, the gas-sealing material 31 is formed inside the through opening K211 so that the gas-sealing material 31 includes a portion protruding from the surface of the diffusion-preventing coating 211. The gas-sealing material 31 is formed so that a thickness TH is the sum of a depth DP1 of the through opening K211 and a depth DP2 of the through opening K221 (TH = DP1 + DP2).

### [B-5] Separator stacking process

Next, the separators 21, 22 are stacked as illustrated in Fig. 4.

The separator 22 is stacked on the separator 21 so that the gas-sealing material 31 formed inside the through opening K211 is housed in the through opening K211.

After the above processes, the electrochemical device 1c of this embodiment is completed.

### [C] Summary

As described above, in the electrochemical device 1c of this embodiment, the gas-sealing material 31 is formed to be in direct contact with the surface of the separator 21 and the surface of the separator 22 inside the through openings K211 and K221. In this embodiment, the gas-sealing material 31 is entirely housed in a sealed space made up of the through openings K211 and K221, which is different from the case of the first embodiment. Even when a reaction occurs between the material composing the gas-sealing material 31 and the material composing the diffusion-preventing coatings 211, 221, and even when a part of the diffusion-preventing coatings 211, 221 peels off, the structure is such that a reacted portion is not exposed to the outside air so that diffusion of metal elements (such as Cr) in the metal material composing the separators 21, 22 can be suppressed.

As a result, even when the gas-sealing material 31 deteriorates, the sealing performance can be sufficiently ensured, so the performance of the electrochemical cell 10 (power generation performance and electrolysis performance) can be exhibited even more efficiently in this embodiment than in the above embodiments. In addition, even when the diffusion-preventing coatings 211, 221 deteriorate due to reaction, the diffusion of metal elements (such as Cr) in the metal material composing the separators 21, 22 can be sufficiently prevented. Therefore, the deterioration of the performance of the electrochemical cell 10 due to diffusion of metal elements (such as Cr) can be suppressed more effectively in this embodiment than in the case of the above embodiments.

In this embodiment, the above effects can be fully obtained even when the gas-sealing material 31 cannot be fabricated in an ideal shape as illustrated in Fig. 4 due to manufacturing variations or other reasons.

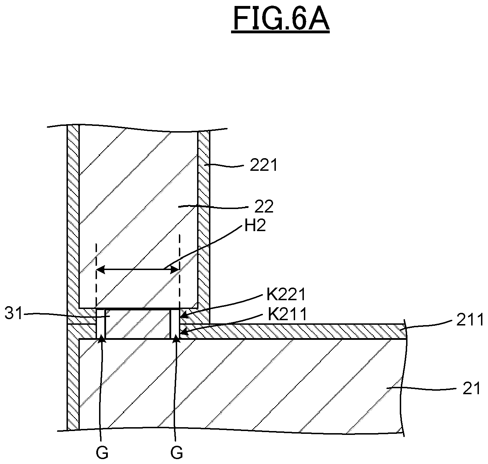

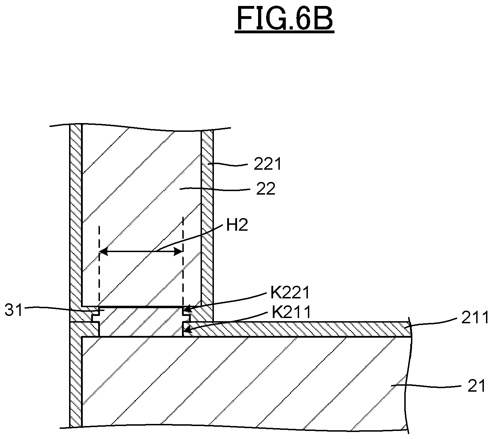

Fig. 6A and Fig. 6B are enlarged sectional views of an enlarged part of the electrochemical device of the third embodiment. Fig. 6A and Fig. 6B illustrate the same portion as in Fig. 4. Fig. 6A illustrates the case when a width of the gas-sealing material 31 is smaller than the width H2 of the through openings K211, K221, while Fig. 6B illustrates the case when the width of the gas-sealing material 31 is larger than the width H2 of the through openings K211, K221.

As illustrated in Fig. 6A, when the width of the gas-sealing material 31 is smaller than the width H2 of the through openings K211, K221, a gap G is interposed between a side surface of the gas-sealing material 31 along the stack direction (longitudinal direction in the figure) and an inner surface of the through openings K211, K221 along the stack direction. The surfaces of the separators 21, 22 where the gap G is located are not covered with the diffusion-preventing coatings 211, 221. However, since the surfaces of the separators 21, 22 where the gap G is located are exposed to the sealed space made up of the through openings K211 and K221, metal elements (such as Cr) in the metal material composing the separators 21, 22 do not diffuse into the electrochemical cell 10. As a result, this embodiment can prevent capacity of the electrochemical cell 10 from being reduced due to the diffusing metal elements (such as Cr).

As illustrated in Fig. 6B, when the width of the gas-sealing material 31 is larger than the width H2 of the through openings K211, K221, it is considered that an overlapped portion between the diffusion-preventing coatings 211, 221 and the gas-sealing material 31 will react and generate bubbles. However, even when bubbles are generated and part of the diffusion-preventing coatings 211, 221 is lost, the reacted portion is inside a bonding interface and sealed by the through openings K211, K221 of the diffusion-preventing coatings 211, 221. Therefore, in this embodiment, the diffusion of metal elements (such as Cr) in the metal material composing the separators 21, 22 can be prevented, and thus the capacity of the electrochemical cell 10 can be prevented from being lowered due to the diffusing metal elements (such as Cr).

Although a detailed explanation is omitted, the above effect can be obtained in the portion where the gas-sealing material 32 is formed as well as in the portion where the gas-sealing material 31 is formed.

### <Others>

Although some embodiments of the present invention have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE NUMERALS

1: electrochemical device, 1J: electrochemical device, 1b: electrochemical device, 1c: electrochemical device, 10: electrochemical cell, 11: support, 12: hydrogen electrode, 13: electrolyte membrane, 14: oxygen electrode, 21: separator, 22: separator, 23: separator, 24: separator, 31: gas-sealing material, 32: gas-sealing material, 33: gas-sealing material, 33a: gas-sealing material, 211: diffusion-preventing coating, 221: diffusion-preventing coating, 231: diffusion-preventing coating, 241: diffusion-preventing coating, 311: reaction-preventing layer, 321: reaction-preventing layer, 331: reaction-preventing layer, K211: through opening, K221: through opening, M211: mask layer, M221: mask layer, SP22: inner space, SP23: inner space

## Claims

1. An electrochemical device, comprising:
an electrochemical cell with an electrolyte membrane interposed between a hydrogen electrode and an oxygen electrode;
a plurality of separators formed of a metal material; and
gas-sealing materials for sealing at least one of between the electrochemical cell and the separator and between the plurality of separators, wherein
diffusion-preventing coatings, which prevent diffusion of metal elements in the metal material composing the separators, cover surfaces of the separators,
the diffusion-preventing coating is formed of a material that reacts with a material composing the gas-sealing material; and
there are portions where the separators are in direct contact with the gas-sealing materials.

2. The electrochemical device according to claim 1, wherein
the separators include:
a first separator; and
a second separator stacked on the first separator,
the diffusion-preventing coatings include:
a first diffusion-preventing coating formed on a surface of the first separator, and
a second diffusion-preventing coating formed on a surface of the second separator, wherein
the first diffusion-preventing coating includes:
a first through opening formed to penetrate the first diffusion-preventing coating in a stack direction where the first separator and the second separator are stacked,
the second diffusion-preventing coating includes:
a second through opening formed to penetrate the second diffusion-preventing coating in the stack direction and to be opposite to the first through opening in the stack direction, and
the gas-sealing material is formed to be in direct contact with the surface of the first separator and the surface of the second separator inside the first through opening and the second through opening.

3. An electrochemical device, comprising:
an electrochemical cell with an electrolyte membrane interposed between a hydrogen electrode and an oxygen electrode;
a plurality of separators formed of a metal material; and
gas-sealing materials for sealing at least one of between the electrochemical cell and the separator and between the plurality of separators, wherein
diffusion-preventing coatings, which prevent diffusion of metal elements in the metal material composing the separators, cover surfaces of the separators,
the diffusion-preventing coating is formed of a material that reacts with a material composing the gas-sealing material, and
reaction-preventing layers, which prevent a reaction between the diffusion-preventing coatings and the gas-sealing materials, are interposed between the diffusion-preventing coatings and the gas-sealing materials.

4. The electrochemical device according to any one of claims 1 to 3, wherein the diffusion-preventing coating contains at least one of oxides of Co, Mn, Cu, Ni, and Fe.

5. A manufacturing method of the electrochemical device according to claim 2, comprising:
a mask layer formation process of forming a first mask layer on the surface of the first separator in a region where the first through opening is formed, and forming a second mask layer on the surface of the second separator in a region where the second through opening is formed;
a diffusion-preventing coating formation process of forming the first diffusion-preventing coating on the surface of the first separator where the first mask layer is formed and forming the second diffusion-preventing coating on the surface of the second separator where the second mask layer is formed;
a mask layer removal process of forming the first through opening by removing the first mask layer from the surface of the first separator where the first diffusion-preventing coating is formed, and forming the second through opening by removing the second mask layer from the surface of the second separator where the second diffusion-preventing coating is formed;
a gas-sealing material formation process of forming the gas-sealing material inside the first through opening so that the gas-sealing material includes a portion protruding from a surface of the first diffusion-preventing coating; and
a separator stacking process of stacking the second separator on the first separator so that the gas-sealing material formed inside the first through opening is housed in the second through opening.
